# EUROPÄISCHE PATENTSCHRIFT

(11) **EP 0 718 158 B1**
(45) Veröffentlichungstag und Bekanntmachung des Hinweises auf die Patenterteilung: **25.11.1998**
(21) Anmeldenummer: 95810777.3
(22) Anmeldetag: 08.12.1995
(51) Int. Cl.: B60R 19/24

(54) **Stossstange mit Halterungen zum Befestigen an einem Fahrzeug**
Bumper provided with supports for fastening on a vehicle
Pare-chocs pourvu de supports de fixation sur un véhicule

(30) Priorität: 23.12.1994 CH 3928/94
(43) Veröffentlichungstag der Anmeldung: 26.06.1996
(73) Patentinhaber: Alusuisse Technology & Management AG, 8212 Neuhausen am Rheinfall (CH)
(72) Erfinder: Frank, Simon, D-78250 Watterdingen (DE); Graf, Werner, D-78234 Engen (DE)

(56) Entgegenhaltungen:
- US-A- 3 850 466
- US-A- 4 563 028
- US-A- 5 080 410
- PATENT ABSTRACTS OF JAPAN vol. 17 no. 709 (M-1535) ,24.Dezember 1993 & JP-A-05 246289 (SUZUKI MOTOR CORP.) 24.September 1993,
- PATENT ABSTRACTS OF JAPAN vol. 18 no. 576 (M-1697) ,4.November 1994 & JP-A-06 211090 (TOYOTA MOTOR CORP.) 2.August 1994,

## Beschreibung

Die Erfindung betrifft eine Stossstange mit an dieser festgelegten Halterungen zum Befestigen an einem Fahrzeug, insbesondere an einem Personenkraftwagen, wobei die Stossstange zumindest im Bereich der Halterungen gegenüber der Frontlinie des Fahrzeugs gewölbt ausgebildet ist und mit in Abstand zueinander als Druckgurt bzw. Zuggurt angeordneten Profilwänden sowie einem Paar sie verbindender Querwände ein Hohlprofil bildet.

Neben der Querschnittsform der Stossstange beeinflusst auch die Ausgestaltung der Verbindung zum Fahrzeuglängsträger deren Formhaltigkeit sowie deren Kompensationsvermögen für die auftreffende Verformungsenergie.

Zur Befestigung der Stossstange am Fahrzeug sind eine Vielzahl von Halterungen bekannt, die jedoch kaum zur Verbesserung der Formhaltigkeit einer Stossstange bei einem Aufprall beitragen (vgl. zum Beispiel die Amerikanischen Patentschriften US-A-5080410 (Stewart) oder US-A-4563028 (Ogawa)).

Angesichts dieser Gegebenheiten hat sich der Erfinder die Aufgabe gestellt, eine Stossstange mit an dieser festgelegten Halterungen der eingangs erwähnten Art zu schaffen, die bei geringem Gewicht ein hohes Mass an Formhaltigkeit bei ausreichendem Kompensationsvermögen für die auftreffende Verformungsenergie aufweist. Zudem sollen Herstellung und Handhabung der Stossstange sowie der Halterungen sehr einfach sein.

Zur erfindungsgemässen Lösung der Aufgabe führt, dass die Halterungen ein keilförmiges Stützteil aufweisen, das mit seiner Keilschräge dem Zuggurt anliegt und mit diesem im Bereich des höchsten Punktes der Keilschräge verbunden ist.

Die erfindungsgemässe Stossstangenanordnung weiterbildende Merkmale sind Gegenstand von abhängigen Patentansprüchen.

Bei einer bevorzugten Ausführungsform der erfindungsgemässen Stossstange weisen die Halterungen eine an Fahrzeuglängsträgern festlegbare Halterplatte auf, aus welcher das keilförmige Stützteil integral ausgeformt ist.

Die Verbindung des keilförmigen Stützteils mit dem Zuggurt erfolgt zweckmässigerweise über Schrauben oder Nieten.

Bei einer besonders bevorzugten Ausführungsform der erfindungsgemässen Stossstangenanordnung überragt die Breite des Zuggurts die Breite der dem Zuggurt anliegenden Keilschräge des keilförmigen Stützteils beidseits um ein Mass.

Stossstange wie auch Halterungen sind bevorzugt aus einer Leichtmetallegierung insbesondere aus einer Aluminiumlegierung gefertigt, wobei die Stossstange als Profil stranggepresst ist.

Der Winkel zwischen der Keilschräge des keilförmigen Stützteils und der Frontlinie des Fahrzeugs liegt bevorzugt zwischen 5 und 25°, insbesondere zwischen etwa 5 und 15°.

Aus Stabilitätsgründen während eines Aufpralls liegt die senkrechte Projektionslinie p des Bereichs A des höchsten Punktes der Keilschräge auf die Frontlinie F bevorzugt innerhalb eines Längsträgers.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- - Fig. 1: die Draufsicht auf eine Stossstange;
- - Fig. 2: den Querschnitt durch die Stossstange von Fig. 1 nach deren Linie x;
- - Fig. 3: ein vergrössertes Detail von Fig, 1 im Bereich einer Halterung;
- - Fig. 4: eine Schrägsicht auf die Unterseite der Halterung von Fig. 3;
- - Fig. 5a-c: die Verformung der Stossstange im Bereich der Halterung;
- - Fig. 6: ein Kraft-Weg Diagramm zu Belastungsversuchen.

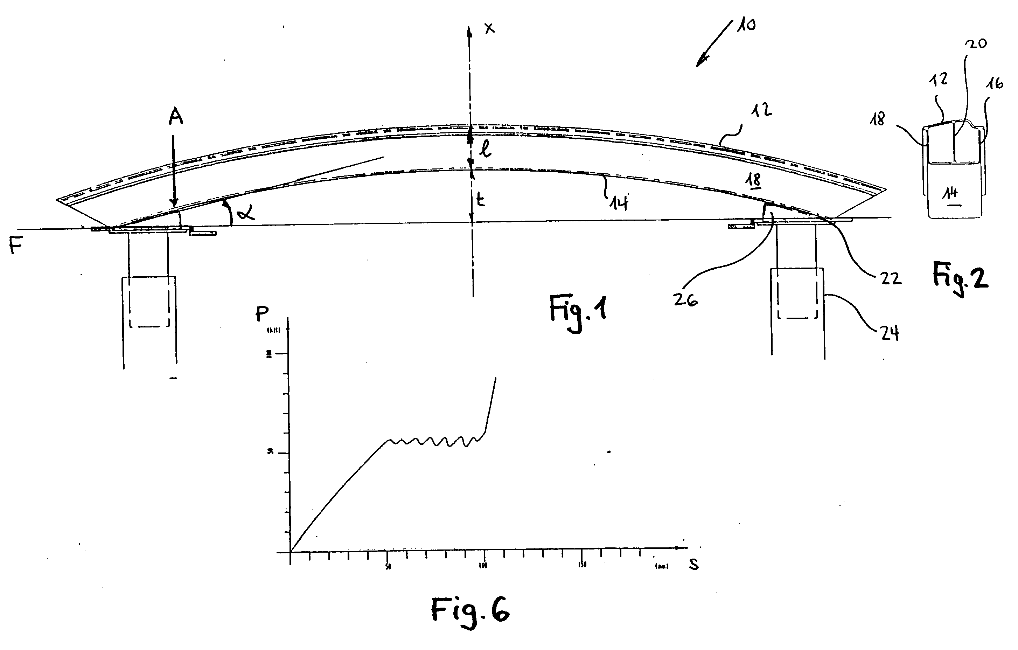

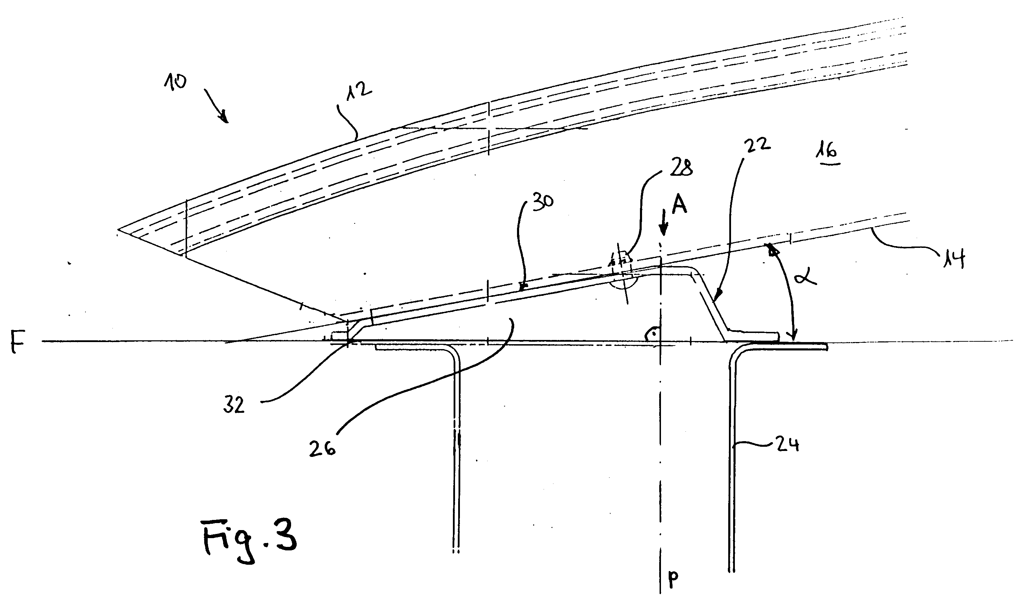

Eine in Fig. 1 dargestellte Stossstange 10 eines aus Gründen der besseren Uebersicht nicht wiedergegebenen Personenkraftwagens ist über Halterungen 22 an Fahrzeuglängsträgern 24 befestigt. Die Stossstange 10 ist als Aluminiumprofil stranggepresst und gegenüber einer gedachten Frontlinie F des Personenkraftwagens mittig um ein Mass t ausgebaucht.

Die Stossstange 10 weist gemäss Fig. 1 und 2 zwei in Abstand l zueinander stehende Profilwände 12, 14 auf, die durch Querwände 16, 18 zu einem kastenförmigen Hohlprofil ergänzt sind. In Einbaulage entspricht die vom Fahrzeug wegweisende Profilwand 12 dem einen Stoss aufnehmenden Aussengurt bzw. Druckgurt, die gegen das Fahrzeug gerichtete Profilwand 14 dem Innengurt bzw. Zuggurt. Mittig zwischen den beiden Querwänden 16, 18 ist ein die Profilwände 12, 14 verbindender Quersteg 20 angeordnet.

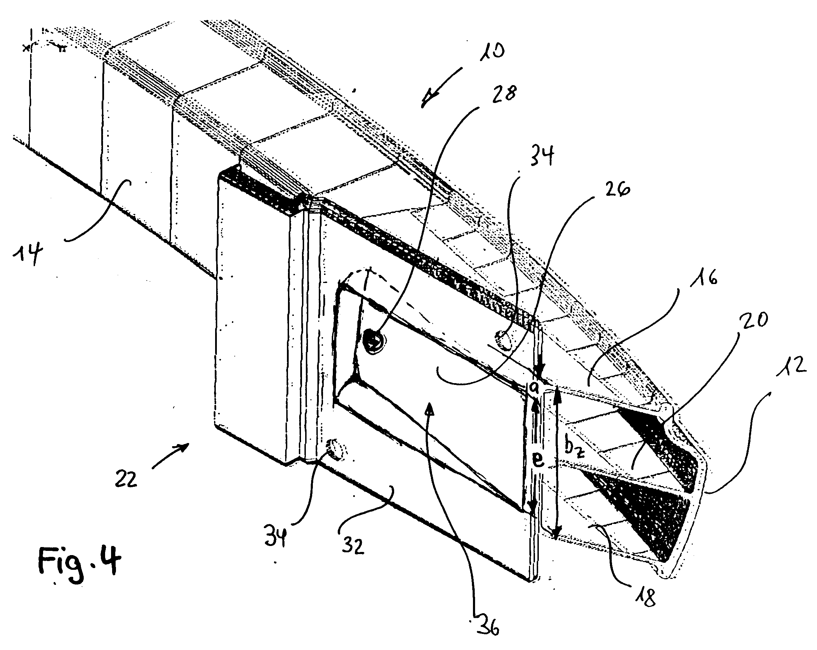

Wie insbesondere aus Fig. 3 und 4 hervorgeht, weist die Halterung 22 eine Halterplatte 32 auf, die in Einbaulage über diagonal angeordnete Bohrungen 34 mit dem Fahrzeuglängsträger 24 verschraubt ist. Aus der Halterplatte 32 ist unter Bildung eines Hohlraumes 36 ein keilförmiges Stützteil 26 ausgeformt. Dieses keilförmige Stützteil 26 liegt mit seiner Keilschräge 30 dem Zuggurt 14 an und ist im Bereich A des höchsten Punktes des Stützteils 26 über eine Niete 28 mit dem Zuggurt 14 verbunden. Hierbei ist aus Stabilitätsgründen während eines Aufpralls von Bedeutung, dass die senkrechte Projektionslinie p des Bereichs A auf die Frontlinie F innerhalb des Längsträgers 24 liegt.

Die Keilschräge 30 bildet mit der gedachten Frontlinie F, die senkrecht zur Fahrzeuglängsrichtung x verläuft, einen Winkel α von beispielsweise 10°.

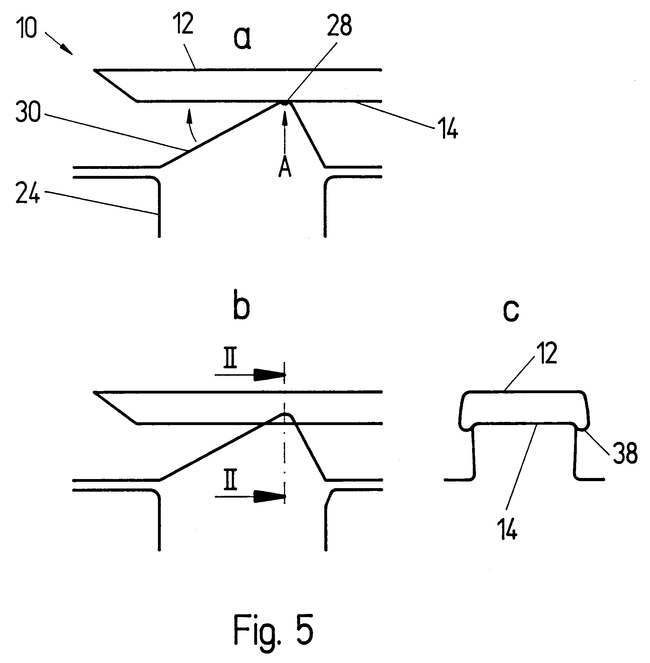

Aus Fig. 4 ist ersichtlich. dass die Breite b_{Z} des Zuggurtes 14 die Breite e des keilförmigen Stützteils 26 bzw. der Keilschräge 30 beidseits um ein Mass a überragt. Die Bedeutung dieser speziellen Anordnung ergibt sich aus der Betrachtung des in Fig. 5a bis c schematisch dargestellten Verformungsablaufs der Stossstange 10 im Bereich der Halterung 22.

Bei der Einwirkung einer frontalen Kraft P auf die Stossstange 10 wird diese zunächst in einer ersten Stufe der Verformung gerade gerichtet, d.h. es erfolgt eine Drehung um eine Achse im Bereich A des höchsten Punktes der Keilschräge 30, wodurch sich der Zuggurt 14 von der Keilschräge 30 abhebt. Der Bereich A bildet nunmehr die alleinige Auflagefläche für die Stossstange 10 (Fig. 5a). Im nachfolgenden, in Fig. 5b, c (Fig. 5c zeigt den Querschnitt von Fig. 5b nach deren Linie II-II) dargestellten zweiten Verformungsschritt erfolgt die eigentliche Verformung der Stossstange 10 und damit die Vernichtung des grössten Teils der Aufprallenergie. Wie insbesondere aus Fig. 5c hervorgeht, hat die kleinere Breite e des keilförmigen Stützteils 26 gegenüber der Breite b_{Z} des Zuggurtes 14 der Stossstange 10 zur Folge, dass sich die Stossstange 10 unter Ausbildung von Wulsten 38 klammerartig um das Stützteil 26 verformt. Aus der teilweisen Umschliessung des Stützteils 26 durch die sich teilweise verformende Stossstange 10 resultiert eine Stabilität, die der Verwindung der Stossstange 10 entgegenwirkt, deren Formhaltigkeit erhöht und insgesamt das Kompensationsvermögen für die auftreffende Verformungsenergie verbessert.

Das Kraft-Weg Diagramm nach Fig. 6 zeigt die Abhängigkeit der Druckkraft P (kN) vom Durchbiegungsweg s (mm) als Ergebnis eines an einer erfindungsgemässen Stossstangenanordnung durchgeführten Belastungstestes. Der Kurvenverlauf weist auf das ausgezeichnete Kompensationsvermögen für die auftreffende Verformungsenergie hin.

## Patentansprüche

1. Stossstange mit an dieser festgelegten Halterungen zum Befestigen an einem Fahrzeug, insbesondere an einem Personenkraftwagen, wobei die Stossstange zumindest im Bereich der Halterungen (22) gegenüber der Frontlinie (F) des Fahrzeugs gewölbt ausgebildet ist und mit in Abstand (l) zueinander als Druckgurt (12) bzw. Zuggurt (14) angeordneten Profilwänden (12,14) sowie einem Paar sie verbindender Querwände (16,18) ein Hohlprofil bildet,
dadurch gekennzeichnet,
dass die Halterungen (22) ein keilförmiges Stützteil (26) aufweisen, das mit seiner Keilschräge (30) dem Zuggurt (14) anliegt und mit diesem im Bereich (A) des höchsten Punktes der Keilschräge (30) verbunden ist.

2. Stossstange nach Anspruch 1, dadurch gekennzeichnet, dass die Halterungen (22) eine an Fahrzeuglängsträgern (24) festlegbare Halterplatte (32) aufweisen, aus welcher das keilförmige Stützteil (26) integral ausgeformt ist.

3. Stossstange nach Anspruch 1 oder 2, dadurch gekennzeichnet, dass das keilförmige Stützteil (26) mit dem Zuggurt (14) verschraubt oder vernietet ist.

4. Stossstange nach einem der Ansprüche 1 bis 3, dadurch gekennzeichnet, dass die Breite (b_{Z}) des Zuggurts (14) die Breite (e) der dem Zuggurt (14) anliegenden Keilschräge (30) des keilförmigen Stützteils (26) beidseits um ein Mass (a) überragt.

5. Stossstange nach einem der Ansprüche 1 bis 4, dadurch gekennzeichnet, dass sie aus einem stranggepressten Profil aus einer Leichtmetallegierung, insbesondere aus einer Aluminiumlegierung besteht.

6. Stossstange nach einem der Ansprüche 1 bis 5, dadurch gekennzeichnet, dass die Halterungen (22) aus einer Leichtmetallegierung, insbesondere aus einer Aluminiumlegierung, gefertigt sind.

7. Stossstange nach einem der Ansprüche 1 bis 6, dadurch gekennzeichnet, dass der Winkel (α) zwischen der Keilschräge (30) des keilförmigen Stützteils (26) und der Frontlinie (F) des Fahrzeugs 5 bis 25°, insbesondere 5 bis 15°, beträgt.

8. Stossstange nach einem der Ansprüche 1 bis 7, dadurch gekennzeichnet, dass die senkrechte Projektionslinie (p) des Bereichs (A) des höchsten Punktes der Keilschräge (30) auf die Frontlinie (F) innerhalb eines Längsträgers (24) liegt.

## Claims

1. Bumper with brackets attached for mounting it onto a vehicle, in particular a private car, such that at least in the region of the brackets (22), the bumper is bowed with respect to the front line (F) of the vehicle, and features section walls (12, 14) a distance (l) apart in the form of a compression wall (12) and a tension wall (14) and a pair of transverse walls (16, 18) joining them making up a hollow section,
characterised in that,
the brackets (22) feature a wedge-shaped support (26), the sloping face (30) of which lies against the tension wall (14) and is connected to this in region (A) at the highest point of the sloping face (30).

2. Bumper according to claim 1, characterised in that the brackets (22) feature a mounting plate (32) that cap be attached to the longitudinal frame members (24) of vehicles, and is shaped such that the wedge-shaped support (26) is an integral part of it.

3. Bumper according to claim 1 or 2, characterised in that the wedge-shaped bracket (26) is bolted or riveted onto the tension wall (14).

4. Bumper according to one of the claims 1 to 3, characterised in that the breadth (b_{Z}) of the tension wall (14) projects on both sides a distance (a) beyond the breadth (e) of the sloping face (30) of the wedge-shaped support (26).

5. Bumper according to one of the claims 1 to 4, characterised in that it is made from an extruded section of a light metal alloy, in particular an alloy of aluminium.

6. Bumper according to one of the claims 1 to 5, characterised in that the brackets (22) are made of a light metal alloy, in particular an alloy of aluminium

7. Bumper according to one of the claims 1 to 6, characterised in that the angle (α) between the sloping face (30) of the wedge-shaped support (26) and the front line (F) of the vehicle is 5 to 25°, in particular 5 to 15°.

8. Bumper according to one of the claims 1 to 7, characterised in that vertical line of projection (p) in region (A) at the highest point of the sloping face (30) lies within a longitudinal frame member (24).

## Revendications

1. Pare-chocs comprenant des montures fixées sur lui-même et destinées à la fixation sur un véhicule, en particulier sur un véhicule automobile, le pare-chocs étant réalisé de manière bombée au moins dans la région des montures (22) par rapport à la ligne frontale (F) du véhicule, et formant un profilé creux qui comprend des parois de profilé (12, 14) agencées à distance (l) l'une de l'autre et formant une ceinture de compression (12) et une ceinture de traction (14), ainsi qu'une paire de parois transversales (16, 18) qui les relient,
caractérisée en ce que
les montures (22) comportent une partie de soutien en forme de coin (26), qui est appliquée par sa partie de coin en oblique (32) sur la ceinture de traction (14) et qui est reliée à celle-ci dans la région (A) du point le plus élevé de la partie de coin en oblique (30).

2. Pare-chocs de selon la revendication 1, caractérisé en ce que les montures (22) comportent une plaque de maintien (32) susceptible d'être fixée sur les longerons (24) du véhicule, depuis laquelle la partie de soutien en forme de coin (26) est formée de façon intégrée.

3. Pare-chocs selon l'une ou l'autre des revendications 1 et 2, caractérisé en ce que la partie de soutien en forme de coin (26) est vissée ou rivetée à la ceinture de traction (14).

4. Pare-chocs selon l'une des revendications 1 à 3, caractérisé en ce que la largeur (b_{Z}) de la ceinture de traction (14) dépasse la largeur (e) de la partie de coin en oblique (30) de la partie de soutien en forme de coin (26) appliquée contre la ceinture de traction (14) des deux côtés d'une certaine valeur (a).

5. Pare-chocs selon l'une des revendications 1 à 4, caractérisée en ce qu'il est constitué d'un profilé extrudé en alliage de métal léger, en particulier en alliage d'aluminium.

6. Pare-chocs selon l'une des revendications 1 à 5, caractérisée en ce que les montures (22) sont réalisées en alliage de métal léger, en particulier en alliage d'aluminium.

7. Pare-chocs selon l'une des revendications 1 à 6, caractérisé en ce que l'angle (α) entre la partie de coin en oblique (30) de la partie de support en forme de coin (26) et la ligne frontale (F) du véhicule s'élève a 5 à 25°, en particulier 5 à 15°.

8. Pare-chocs selon l'une des revendications 1 à 7, caractérisé en ce que la ligne de projection perpendiculaire (p) de la région (A) du point le plus élevé de la partie de coin en oblique (30) sur la ligne frontale (F) est située à l'intérieur d'un longeron (24).
